# EUROPEAN PATENT APPLICATION

(11) **EP 4 729 900 A1**
(43) Date of publication of application: **22.04.2026**
(21) Application number: 24383131.0
(22) Date of filing: 15.10.2024
(51) Int. Cl.: G01K 1/02, A62C 3/08, G01K 1/18, G01K 3/00, G01K 3/10, G01K 3/14, G08B 17/00, B64D 45/00

(54) **TEMPERATURE SENSING ASSEMBLY FOR AN AICRAFT**

(71) Applicant: Airbus Operations S.L.U., 28906 Getafe, Madrid (ES)
(72) Inventor: MARCOS IZQUIERDO, Juan Luis, E-28906 Getafe, Madrid (ES)
(74) Representative: ABG Intellectual Property Law, S.L.

(57) **Abstract**

The present invention belongs to the field of aircraft and relates to a temperature sensing assembly for a fire detection system for an aircraft. The present invention also provides a fire detection system, an aircraft section and an aircraft.

## Description

### TECHNICAL FIELD OF THE INVENTION

The present invention belongs to the field of aircraft and relates to a temperature sensing assembly for a fire detection system for an aircraft. The present invention also provides a fire detection system for an aircraft, an aircraft section and an aircraft.

### BACKGROUND OF THE INVENTION

Aviation industry is undergoing a concerted effort to explore alternative fuels and propulsion systems as part of a broader initiative to mitigate the environmental impact of air travel. In that sense, a particularly promising candidate is the implementation of hydrogen as an aviation fuel.

The combustion of hydrogen results in the emission of mainly water vapour, positioning hydrogen as a clean and environmentally friendly energy source.

However, the practical incorporation of hydrogen into aviation as a fuel source still presents technical challenges. Among these challenges is the reliable detection of a fire produced with hydrogen.

Fire sensors currently used in aircraft include a small tube defining an inner chamber that contains an inert gas (such as Helium) and a small filament of Titanium that can absorb H2. This sensor has two direct forms of detection:
- When an increase of temperature in the atmosphere surrounding the filament is produced, the inert gas will try to expand. As the volume of the tube is closed, the pressure will raise and will trigger a "fire" signal due to general temperature raise (threshold of 190°C, globally).
- When a flame impacts directly the sensor and a local raise of temperature is produced, the filament will liberate H2 in the inner chamber, raising the pressure and triggering the "fire" signal (threshold of 480°C, locally).

When a fire is produced with kerosene, the heat flux of temperature due to the combustion irradiates in all directions. Therefore, the existing sensors for detecting fire in an aircraft are able to reliably detect a fire produced with kerosene at an early stage.

However, in a fire produced with hydrogen, most of the heat transmission in the hydrogen flame is produced in the direction of the flame and the flame does not irradiate in all directions, as the kerosene flame does. Therefore, for a detection based on an increase of temperature in the atmosphere surrounding the filament of a fire sensor of the state of the art, the triggering of a fire signal would take longer than in the case of a kerosene fire, since the hydrogen flame needs to heat up the air surrounding the filament by convection until a noticeable effect is produced.

Therefore, there is a need for new fire detectors able to reliably detect a fire produced with hydrogen.

### SUMMARY OF THE INVENTION

The present invention provides a solution for the aforementioned problems by a temperature sensing assembly according to claim 1, a fire detection system according to claim 6, an aircraft section according to claim 8 and an aircraft according to claim 15. In dependent claims, embodiments of the invention are defined.

In a first inventive aspect, the invention provides a temperature sensing assembly for a fire detection system for an aircraft, the temperature sensing assembly comprising:
- a plate of material having a thermal conductivity greater than 200 W/(m K), and
- a plurality of thermocouples arranged on the plate.

The temperature sensing assembly of the present invention comprises a plate of material having a thermal conductivity greater than 200 W/(m K). This thermal conductivity ensures fast heat transport throughout the extension of the plate. The temperature sensing assembly also comprises a plurality of thermocouples arranged on the plate. The thermocouples are arranged at a plurality of locations on the plate, thus allowing sensing the temperature at said locations.

In the presence of a fire, the heat will raise the temperature of the plate of the temperature sensing assembly of the present invention. Due to its thermal conductivity, the whole plate will heat-up quickly, including the locations of the plate where the thermocouples are arranged. By monitoring the temperature measured by the thermocouples arranged on the plate, the increase of temperature caused by the fire will be detected. The greater the thermal conductivity of the plate, the quicker the heat transport and the detection of a temperature increase will be. Also, by measuring the temperature at the plurality of locations where the thermocouples are placed, a temperature map can be obtained, thus providing information on the location and/or extension of the fire.

Advantageously, the temperature sensing assembly of the present invention is able to sense the increase in temperature caused by a fire produced with hydrogen, since even when the flame does not reach the position of a thermocouple, the plate will transport the heat throughout its extension, reaching the thermocouples arranged thereon. However, the temperature sensing assembly is also applicable to sense the temperature increase caused by fire produced with kerosene or other flammable fluids.

In the context of the invention, the plate shall not be construed to be restricted to any specific shape. In an embodiment, the plate is embodied as a continuous layer on which the plurality of thermocouples are arranged, wherein the layer can have any shape. In another embodiment, the plate is embodied as a plurality of plate portions or strips that may or may not be interconnected. The plate may also be a plate with holes or perforations.

The area of the plate and the number of thermocouples will depend on the specific application of the temperature sensing assembly, especially on the section of the aircraft to be monitored for detecting occurrence of a fire and on the desired time response.

In an embodiment, the plate is embodied as a plurality of strips.

In an embodiment, the plate has a thickness smaller than 2 mm.

Advantageously, a plate having a thickness smaller than 2 mm has very small thermal inertia and will tend to transport the heat to the rest of the surface of the plate, making it easier to detect a high temperature caused by a fire at any location on the plate. Also, when the temperature sensing assembly is mounted on an aircraft, a plate having a thickness smaller than 2 mm will add a limited weight to the aircraft.

In an embodiment, the material of the plate has a thermal inertia smaller than 4.8 KJ/(K. m2). The smaller the thermal inertia of the plate, the quicker the heat transport and the detection of a temperature increase will be.

Although the thickness of the plate adds thermal inertia, it also adds heat flux collection area, so that the main parameter to take into account for thermal inertia is the nature of the material of the plate (such as material density) and the thickness of this material (i.e. the thickness of the plate).

In an embodiment, the plate is made of aluminium, titanium, gold, diamond, silver, copper, or an alloy, such as a steel alloy or an alloy comprising aluminium, copper and/or silver, for example a steel and aluminium alloy, or other types of materials including materials that may comprise graphite and be specifically doped to have a high thermal conductivity.

In an embodiment, the distance between nearest thermocouples is smaller than 2 m.

In a second inventive aspect, the invention provides a fire detection system for an aircraft, the fire detection system comprising:
- a temperature sensing assembly according to any of the embodiments of the first inventive aspect, and
- a controller configured to receive the temperatures measured by the thermocouples and to determine if one or more of the measured temperatures complies with at least one predetermined criterion.

As described in connection with the temperature sensing assembly, the thermocouples of the temperature sensing assembly measure the temperature at the specific locations of the plate on which they are arranged. The controller of the fire detection system of the present invention is configured to receive the temperatures measured by the thermocouples and to determine if one or more of the measured temperatures complies with at least one predetermined criterion. Determining if one or more of the temperatures received from the thermocouples complies with at least one predetermined criterion allows determining if there is an anomalous situation.

In an embodiment, the at least one predetermined criterion comprises one or more of the following criteria:
(i) at least one of the measured temperatures exceeds at least one predetermined threshold, for example a threshold that defines the temperature expected for a specific situation or a threshold that defines a temperature indicative of a fire event; and/or
(ii) a plurality of the measured temperatures exceed at least one predetermined threshold, for example a threshold that defines the temperature expected for a specific situation or a threshold that defines a temperature indicative of a fire event; and/or
(iii) there is a gradient in the time evolution of the temperature measured by at least one of the thermocouples, for example an increase of the temperature measured as a function of time; and/or
(iv) there is a spatial gradient in the temperatures measured by the plurality of thermocouples, for example a spatial gradient indicative of the presence of a heat source.

By monitoring the temperatures measured by the thermocouples arranged on the plate, the increase of temperature caused by a fire will be detected. The greater the thermal conductivity of the plate, the quicker the heat transport and the detection of a temperature increase will be. Also, by measuring the temperature at the plurality of locations where the thermocouples are placed, a temperature map can be obtained, thus allowing detecting anomalous results, such as anomalous values and/or unexpected spatial gradients in the temperatures measured by the plurality of thermocouples, and providing information on the location and/or extension of the region(s) where the anomalous results are detected. When the temperatures measured are indicative of a fire event, the temperature map provides information on the location and/or extension of the fire.

In an embodiment, the controller is configured to build a temperature map based on the temperature measurements at the plurality of locations where the thermocouples are arranged, thus allowing to easily correlate the measured temperatures with the location of the thermocouples, as well as to locate and/or determine the extension of the heat source, if any.

In an embodiment, the controller of the fire detection system of the present invention is configured to monitor the temperatures measured by the thermocouples as a function of time.

In an embodiment, the at least one predetermined criterion comprises a plurality of criteria.

In an embodiment, the controller is configured to trigger an alarm if the temperature measured by one or more of the thermocouples complies with one or more of the at least one predetermined criterion.

In an embodiment, the controller is a dedicated controller of the fire detection system. In another embodiment, the fire detection system is implemented in an aircraft and the controller is a control unit of the aircraft.

In a third inventive aspect, the invention provides an aircraft section comprising:
- a temperature sensing assembly according to any of the embodiments of the first inventive aspect; and/or
- a fire detection system according to any of the embodiments of the second inventive aspect.

In an embodiment, the plate is arranged extending along at least a portion of an inner face of the aircraft section.

By arranging the plate along the portion of the aircraft section desired to be monitored, a fired occurring within said portion of the aircraft section will be quickly and reliably detected.

In an embodiment, the aircraft section comprises a skin.

In an embodiment, the plate is configured to provide a structural function for the aircraft section. This allows to reduce the thickness of the skin of the aircraft section, thus at least partially compensating the weight of the plate.

In an embodiment, the aircraft section comprises a skin and the plate is at least a portion of the skin of the aircraft section. In this embodiment the plate is embodied as at least a portion of the skin of the aircraft section and the thermocouples are arranged on said portion of the skin and/or at least partially embedded in said portion of the skin. Advantageously, in this embodiment there is no additional weight added to the aircraft section by the provision of the plate.

In an embodiment, the aircraft section comprises a skin and the plate is attached to the skin of the aircraft section. The plate may be attached to the skin in different ways, such as glued and/or fixed with mechanical means, such as bolts and/or screws.

In an embodiment, the plate is attached to the skin keeping a gap between plate and skin. In another embodiment, the plate is in contact with the skin. In another embodiment, the plate is at least partially embedded in the skin.

In an embodiment, the plate is embodied as:
- a continuous layer; or
- as a plurality of strips.

In an embodiment, the plate is embodied as a plurality of strips that may or may not be interconnected.

In an embodiment, the plate is embodied as a plurality of strips, wherein:
- each strip extends at least partially along a longitudinal direction of the aircraft section, or
- each strip extends at least partially along a direction transversal to a longitudinal direction of the aircraft section, or
- any combination of the above.

The longitudinal direction will be understood as the direction between a first end of the aircraft section and a second end of the aircraft section. In an embodiment, at least one of these section ends can communicate with other sections of the aircraft. In an embodiment, at least one of these section ends corresponds to the aircraft fuselage end. In addition, the transversal direction shall be understood as the direction which lies between two lateral sides of the aircraft section, these lateral sides being comprised between the mentioned first and second ends of the aircraft section.

Advantageously, the embodiment wherein the plate is implemented as a plurality of interconnected strips provides better and faster fire detection as heat can be transferred from one strip to another and a temperature increase can thus be detected by various thermocouples situated on different strips. Also, in this embodiment the plate adds a limited weight to the aircraft.

In an embodiment, the plate is implemented as:
- a first plurality of strips that extend at least partially along a first direction, and
- a second plurality of strips that extend at least partially along a second direction, wherein the second direction is different to the first direction;
wherein the first and second plurality of strips are interconnected at crossing points where strips from one of the first or second plurality of strips cross strips from the other one of the first or second plurality of strips.

In an embodiment, the first direction and the second direction are substantially perpendicular.

In an embodiment, the first direction is a longitudinal direction of the aircraft section.

In an embodiment, the first direction is a longitudinal direction of the aircraft section and the second direction is a direction transversal to the longitudinal direction of the aircraft section.

In an embodiment, the plate is arranged at an upper part of the aircraft section when the aircraft is on ground or in straight flight. This embodiment is advantageous for detecting fires caused by hydrogen, where most of the irradiation of the hydrogen flame goes to the upper part of the flame and the flame does not irradiate in all directions.

In an embodiment, the plate is arranged extending on at least 10% of the perimeter of the aircraft section. The plate may extend on at least 10% of the perimeter of the aircraft section continuously or discontinuously. In an embodiment, the plate is arranged extending from 10% to 40% of the perimeter of the aircraft section.

In an embodiment, the aircraft section is a fuselage section. In another embodiment, the aircraft section is a tail cone section.

In an embodiment, the aircraft section is a section of the aircraft containing any flammable fluid.

In an embodiment, the aircraft section is an engine section or an auxiliary power unit section.

An engine section shall be construed as the section of the aircraft where an engine is located.

An auxiliary power unit section shall be construed as the section of the aircraft where an auxiliary power unit is located.

In a third inventive aspect, the invention provides an aircraft comprising:
- a temperature sensing assembly according to any of the embodiments of the first inventive aspect;
- a fire detection system according to any of the embodiments of the second inventive aspect; and/or
- an aircraft section according to any of the embodiments of the third inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
Figure 1 schematically shows a temperature sensing assembly according to an embodiment of the present invention.
Figure 2 schematically shows a fire detection system according to an embodiment of the present invention.
Figure 3 schematically shows an aircraft section according to an embodiment of the present invention.
Figures 4A-4B schematically show an aircraft section according to an embodiment of the present invention.
Figure 5A-5B schematically show an aircraft section according to an embodiment of the present invention.
Figure 6A-6B schematically show an aircraft section according to an embodiment of the present invention.
Figure 7A-7B schematically show an aircraft section according to an embodiment of the present invention.
Figure 8 schematically shows an aircraft according to an embodiment of the present invention.

### DETAILED DESCRIPTION OF THE INVENTION

The present invention provides a temperature sensing assembly (1) for a fire detection system (20) for an aircraft (100), the temperature sensing assembly (1) comprising:
- a plate (2) of material having a thermal conductivity greater than 200 W/(m. K), and
- a plurality of thermocouples (3) arranged on the plate (2).

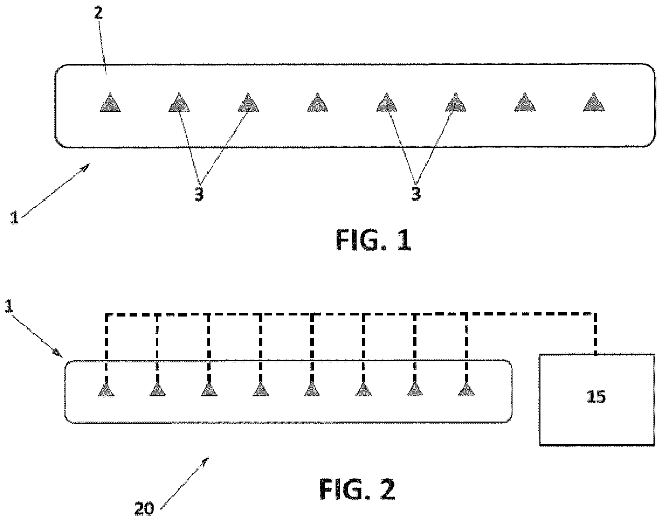

Figure 1 schematically shows a temperature sensing assembly (1) according to an embodiment of the present invention. In the embodiment of figure 1 a plate (2) is shown embodied as a strip on which a plurality of thermocouples (3) are arranged. In figures 1 to 7B the thermocouples (3) have been schematically depicted as triangles.

In the embodiment of figure 1, eight thermocouples (3) have been depicted, but the number of thermocouples (3) and the distance between thermocouples (3) may be set according to the desired performance of the temperature sensing assembly (1), for example depending on the response time desired for the temperature sensing assembly (1). Thus, in other embodiments the temperature sensing assembly (1) may have a different number of thermocouples (3).

In an embodiment, the distance between nearest thermocouples (3) is smaller than 2 m.

The shape and size of the plate (2) may be designed according to the desired performance of the temperature sensing assembly (1), for example depending on the response time desired for the temperature sensing assembly (1).

In an embodiment, the plate (2) has a thickness smaller than 2 mm.

In an embodiment, the material of the plate (2) has a thermal inertia smaller than 4.8 KJ/(K·m²).

In an embodiment, the plate (2) is made of aluminium, titanium, gold, diamond, silver, copper, or an alloy, such as a steel alloy or an alloy comprising aluminium, copper and/or silver, for example a steel and aluminium alloy, or other types of materials including materials that may comprise graphite and be specifically doped to have a high thermal conductivity.

The invention also provides a fire detection system (20) for an aircraft (100), the fire detection system (20) comprising:
- a temperature sensing assembly (1) according to the present invention, and
- a controller (15) configured to receive the temperatures measured by the thermocouples (3) and to determine if one or more of the measured temperatures complies with at least one predetermined criterion.

Figure 2 schematically shows a fire detection system (20) according to an embodiment of the present invention, wherein the data transmission between the thermocouples (3) and the controller (15) has been depicted in dash lines. The temperature sensing assembly (1) shown in this figure 2 corresponds to the one described above for figure 1.

In an embodiment, the controller (15) is a dedicated controller of the fire detection system (20). In another embodiment, the fire detection system (20) is implemented in an aircraft (100) and the controller (15) is a control unit of the aircraft (100).

The invention also provides an aircraft section (10) comprising:
- a temperature sensing assembly (1) according to the present invention; and/or
- a fire detection system (20) according to the present invention.

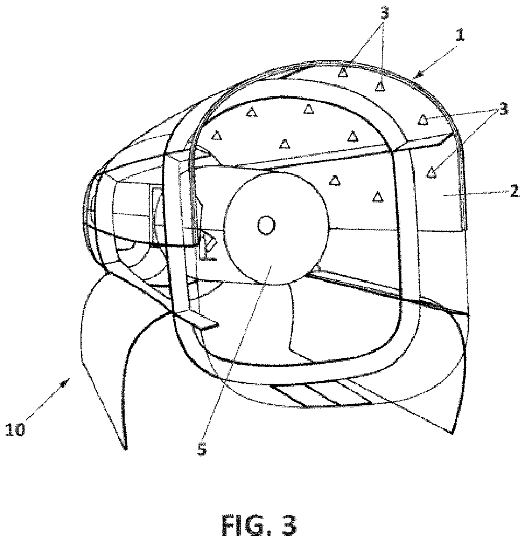

Figures 3 to 7 show several embodiments of the aircraft section (10) according to the invention. In these embodiments the aircraft section (10) is an auxiliary power unit section at the tail cone of an aircraft (100). The aircraft section (10) comprises an auxiliary power unit (5) and a temperature sensing assembly (1) comprising a plate (2) of material having a thermal conductivity greater than 200 W/(m K) and a plurality of thermocouples (3) arranged on the plate (2). In other embodiments, the aircraft section (10) may be a different section of the aircraft (100), such as an engine section or any other section that requires monitoring for fire detection.

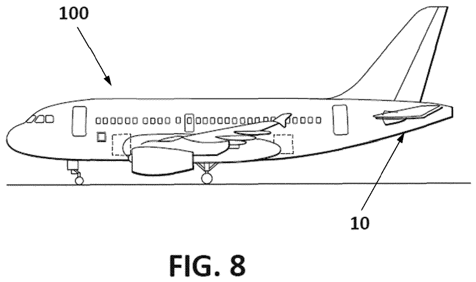

In an embodiment, the plate (2) is arranged at an upper part of the aircraft section (10), wherein "upper" is defined for a situation when the aircraft (100) where the aircraft section (10) is implemented, or intended to be implemented, is on horizontal ground (as shown in figure 8) or in straight flight.

In an embodiment, the plate (2) is arranged extending on at least 10% of the perimeter of the aircraft section (10). In an embodiment, the plate (2) is arranged extending from 10% to 40% of the perimeter of the aircraft section (10).

Figure 3 shows a perspective view of an aircraft section (10) according to an embodiment of the present invention. In the embodiment of figure 3 the plate (2) of the temperature sensing assembly (1) is implemented as a continuous surface extending on a part of an inner face of the aircraft section (10). In this embodiment the plate (2) is arranged at an upper part of the aircraft section (10) and extends partially to side parts of the aircraft section (10). As visible in figure 3, a plurality of thermocouples (3) are arranged at different locations of the plate (2). Advantageously, in the embodiment of figure 3 the heat received at any location of the upper part of the aircraft section (10) reaches the plate (2) and is transferred throughout the whole extension of the plate (2), thus reaching all the thermocouples (3). Therefore, an increase of temperature will be detected by all the thermocouples (3).

In an embodiment, the plate (2) is at least a portion of the skin (4) of the aircraft section (10) and the thermocouples (3) are arranged on said portion of the skin (4). Advantageously, in this embodiment there is limited or no additional weight added to the aircraft section (10) by the provision of the plate (2). In other embodiment, the plate (2) is attached to the skin (4) of the aircraft section (10).

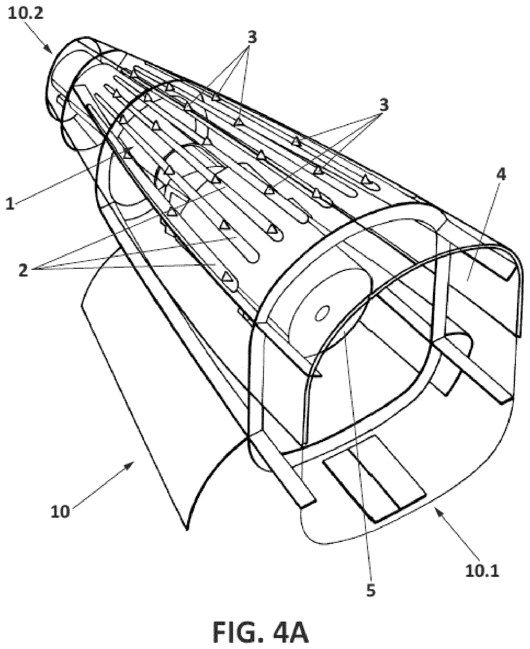

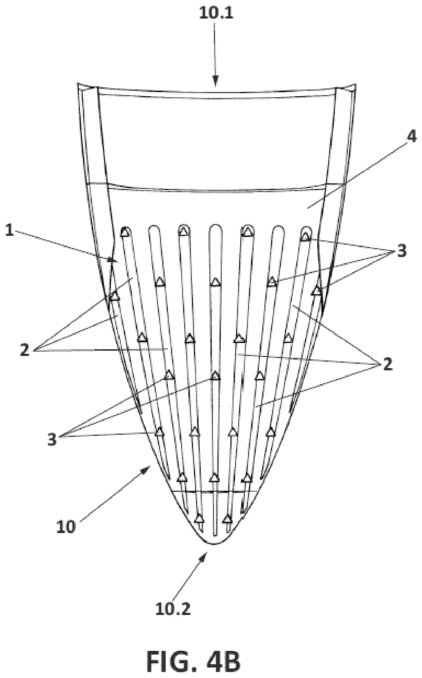

Figure 4A shows a perspective view of an aircraft section (10) according to an embodiment of the present invention. In figure 4A part of the aircraft section (10) is depicted translucent to be able to see internal elements of the aircraft section (10), such as the auxiliary power unit (5). Figure 4B shows a view of an upper part of the aircraft section (10) of figure 4A, where the temperature sensing assembly (1) is arranged. In the embodiment of figures 4A-4B the plate (2) of the temperature sensing assembly (1) is implemented as a plurality of strips that extend at least partially along a longitudinal direction of the aircraft section (10). This longitudinal direction is extended from a first end (10.1) of the aircraft section (10) and a second end (10.2) of the aircraft section (10). The strips are arranged on an inner face of the upper part of the aircraft section (10) and are attached to the skin (4) of the aircraft section (10). As visible in figures 4A-4B, a plurality of thermocouples (3) is arranged at different locations of the strips. In the embodiment of figures 4A-4B, the heat received at each strip is transferred throughout the strip, thus reaching the thermocouples (3) arranged on said strip.

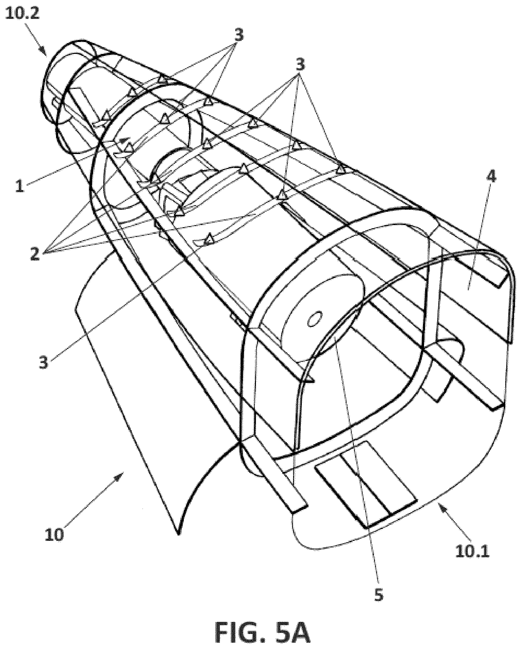

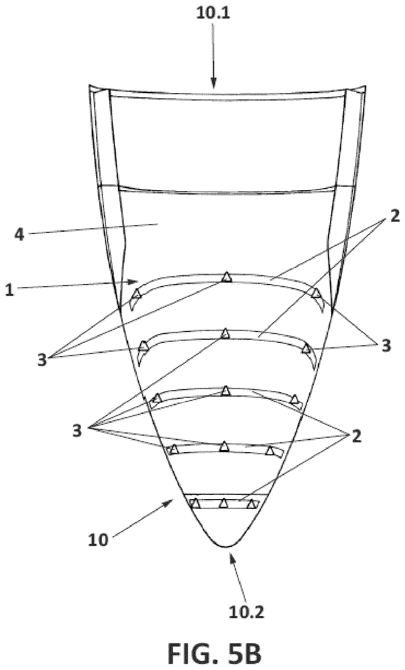

Figure 5A shows a perspective view of an aircraft section (10) according to an embodiment of the present invention. In figure 5A part of the aircraft section (10) is depicted translucent to be able to see internal elements of the aircraft section (10), such as the auxiliary power unit (5). Figure 5B shows a view of an upper part of the aircraft section (10) of figure 5A, where the temperature sensing assembly (1) is arranged. In the embodiment of figures 5A-5B the plate (2) of the temperature sensing assembly (1) is implemented as a plurality of strips that extend at least partially along a direction transversal to the longitudinal direction of the aircraft section (10). The strips are arranged on an inner face of the upper part of the aircraft section (10) and are attached to the skin (4) of the aircraft section (10). As visible in figures 5A-5B, a plurality of thermocouples (3) is arranged at different locations of the strips. In the embodiment of figures 5A-5B, the heat received at each strip is transferred throughout the strip, thus reaching the thermocouples (3) arranged on said strip.

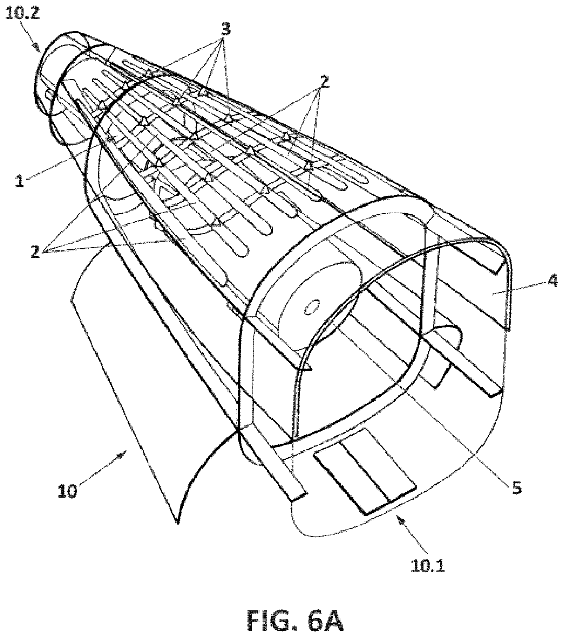

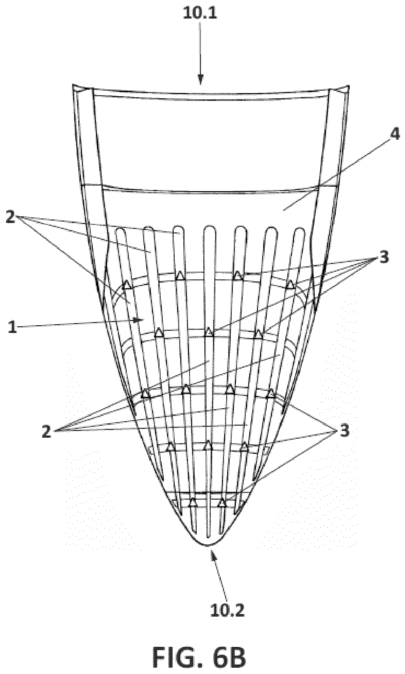

Figure 6A shows a perspective view of an aircraft section (10) according to an embodiment of the present invention. In figure 6A part of the aircraft section (10) is depicted translucent to be able to see internal elements of the aircraft section (10), such as the auxiliary power unit (5). Figure 6B shows a view of an upper part of the aircraft section (10) of figure 6A, where the temperature sensing assembly (1) is arranged. In the embodiment of figures 6A-6B the plate (2) of the temperature sensing assembly (1) is implemented as a first plurality of strips that extend at least partially along a longitudinal direction of the aircraft section (10) and a second plurality of strips that extend at least partially along a direction transversal to the longitudinal direction of the aircraft section (10). The first and second plurality of strips are interconnected at crossing points where strips from one of the first or second plurality of strips cross strips from the other one of the first or second plurality of strips. The strips are arranged on an inner face of the upper part of the aircraft section (10) and are attached to the skin (4) of the aircraft section (10). As visible in figures 6A-6B, a plurality of thermocouples (3) is arranged at different locations of the strips. In an embodiment, the thermocouples (3) are arranged at the crossing points.

The embodiment of figures 6A-6B, wherein the plate (2) is implemented as interconnected strips that extend in different directions, provides better and faster fire detection as heat can be transferred from one strip to another and a temperature increase can thus be detected by various thermocouples (3) situated on different strips. Also, compared to an embodiment where the plate (2) extends on the whole surface of the upper part of the aircraft section (10), the embodiment of figures 6A-6B results in a smaller weight added by the temperature sensing assembly to the aircraft section (10).

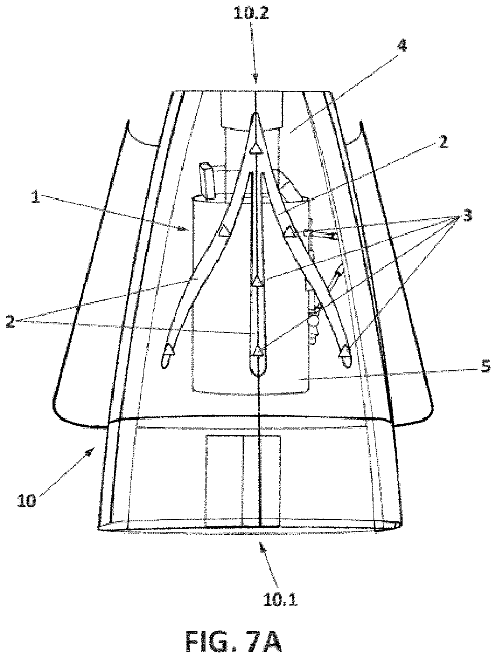

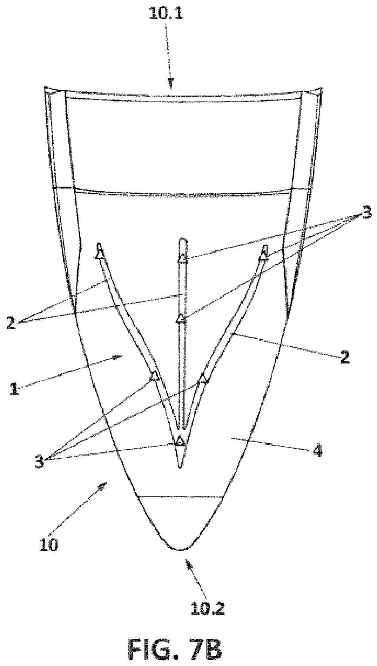

Figure 7A shows a top view of an aircraft section (10) according to an embodiment of the present invention. In figure 7A part of the aircraft section (10) is depicted translucent to be able to see internal elements of the aircraft section (10), such as the auxiliary power unit (5), the plate (2) and the thermocouples (3). Figure 7B shows a view of an upper part of the aircraft section (10) of figure 7A, where the temperature sensing assembly (1) is arranged. In the embodiment of figures 7A-7B the plate (2) of the temperature sensing assembly (1) is implemented as three strips arranged to form approximately the shape of an arrow, wherein the three strips are interconnected at the arrow tip. The strips are arranged on an inner face of the upper part of the aircraft section (10) and are attached to the skin (4) of the aircraft section (10). As visible in figures 7A-7B, the thermocouples (3) are arranged at different locations of the strips. As in the embodiment of figures 6A-6B, implementing the plate (2) as interconnected strips allows heat to be transferred from one strip to another and thus a temperature increase can be detected by various thermocouples (3) situated on different strips. The arrow shape of the plate also allows to adapt the plate to a frustoconical fuselage section.

In the embodiments of figures 3 to 7B, the plate (2) may be attached to the skin in different ways, such as glued and/or fixed with mechanical means, such as bolts and/or screws. In an embodiment, the plate (2) is attached to the skin keeping a gap between plate (4) and skin (4). In another embodiment, the plate (2) is in contact with the skin (4). In another embodiment, the plate (2) is at least partially embedded in the skin (4).

In the embodiments of figures 3 to 7B, the aircraft section (10) may comprise a controller (not shown in figures 3 to 7B) configured to receive the temperatures measured by the thermocouples (3) and to determine if one or more of the measured temperatures complies with at least one predetermined criterion. Additionally or alternatively, a control unit of the aircraft (100) where the aircraft section (10) is implemented, or intended to be implemented, may be configured to receive the temperatures measured by the thermocouples (3) arranged in the aircraft section (10) and to determine if one or more of the measured temperatures complies with at least one predetermined criterion.

In an embodiment, the at least one predetermined criterion comprises one or more of the following criteria:
- at least one of the measured temperatures exceeds at least one predetermined threshold; and/or
- a plurality of the measured temperatures exceed at least one predetermined threshold; and/or
- there is a gradient in the time evolution of the temperature measured by at least one of the thermocouples (3); and/or
- there is a spatial gradient in the temperatures measured by the plurality of thermocouples (3).

Figure 8 shows an aircraft (100) according to the invention, wherein the aircraft (100) comprises:
- a temperature sensing assembly (1) according to the invention; and/or
- a fire detection system (20) according to the invention; and/or
- an aircraft section (10) according to the invention.

In an embodiment, the aircraft comprises a plurality of temperature sensing assemblies (1) and/or a plurality of fire detection systems (20) and/or a plurality of aircraft sections (10) according to the invention to be able to detect fire at a plurality of sections (10) of the aircraft (100). In an embodiment, the aircraft (100) comprises a plurality of temperature sensing assemblies (1) according to the invention arranged at different sections (10) of the aircraft 100) and a single controller (15) is configured to receive the measurements performed by the thermocouples (3) of the different temperature sensing assemblies (1) and to determine if one or more of the measured temperatures complies with at least one predetermined criterion. In other embodiment, there is a dedicated controller (15) for each temperature sensing assembly (1).

## Claims

1. A temperature sensing assembly (1) for a fire detection system for an aircraft (100), the temperature sensing assembly (1) comprising:
- a plate (2) of material having a thermal conductivity greater than 200 W/(m.K), and
- a plurality of thermocouples (3) arranged on the plate (2).

2. The temperature sensing assembly (1) according to claim 1, wherein the plate (2) has a thickness smaller than 2 mm.

3. The temperature sensing assembly (1) according to any of the previous claims, wherein the material of the plate (2) has a thermal inertia smaller than 4.8 KJ/(K·m²).

4. The temperature sensing assembly (1) according to any of the previous claims, wherein the plate (2) is embodied as a plurality of strips.

5. The temperature sensing assembly (1) according to claim 4, wherein the strips are interconnected.

6. A fire detection system (20) for an aircraft (100), the fire detection system (20) comprising:
- a temperature sensing assembly (1) according to any of the previous claims, and
- a controller (15) configured to receive the temperatures measured by the thermocouples (3) and to determine if one or more of the measured temperatures complies with at least one predetermined criterion.

7. The fire detection system (20) according to the previous claim, wherein the at least one predetermined criterion comprises one or more of the following criteria:
- at least one of the measured temperatures exceeds at least one predetermined threshold; and/or
- a plurality of the measured temperatures exceed at least one predetermined threshold; and/or
- there is a gradient in the time evolution of the temperature measured by at least one of the thermocouples (3); and/or
- there is a spatial gradient in the temperatures measured by the plurality of thermocouples (3).

8. An aircraft section (10) comprising:
- a temperature sensing assembly (1) according to any of claims 1 to 5; and/or
- a fire detection system (20) according to claim 6 or 7.

9. The aircraft section (10) according to claim 8, wherein the plate (2) is arranged extending along at least a portion of an inner face of the aircraft section (10).

10. The aircraft section (10) according to claim 8 or 9, wherein the aircraft section (10) comprises a skin (4) and wherein:
- the plate (2) is at least a portion of the skin (4) of the aircraft section (10); or
- the plate (2) is attached to the skin (4) of the aircraft section (10).

11. The aircraft section (10) according to any of claims 8 to 10, wherein the plate (2) is embodied as a plurality of strips, and wherein:
- each strip extends at least partially along a longitudinal direction of the aircraft section (10), or
- each strip extends at least partially along a direction transversal to a longitudinal direction of the aircraft section (10), or
- any combination of the above.

12. The aircraft section (10) according to any of claims 8 to 11, wherein the plate (2) is arranged at an upper part of the aircraft section (10) when the aircraft (100) is on ground or in straight flight.

13. The aircraft section (10) according to any of claims 8 to 12, wherein the plate (2) is arranged extending on at least 10% of the perimeter of the aircraft section (10), preferably from 10% to 40% of the perimeter of the aircraft section (10).

14. The aircraft section (10) according to any of claims 8 to 13, wherein the aircraft section (10) is an engine section or an auxiliary power unit section.

15. An aircraft (100) comprising:
- a temperature sensing assembly (1) according to any of claims 1 to 5; and/or
- a fire detection system (20) according to claim 6 or 7; and/or
- an aircraft section (10) according to any of claims 8 to 14.
